# EUROPEAN PATENT APPLICATION

(11) **EP 1 852 459 A1**
(43) Date of publication of application: **07.11.2007**
(21) Application number: 06713586.3
(22) Date of filing: 13.02.2006
(51) Int. Cl.: C08J 5/16, G03G 15/20, C08L 79/08, C08L 27/12

(54) **FIXING BELT**

(30) Priority: 16.02.2005 JP 2005038895; 16.02.2005 JP 2005039105
(71) Applicant: Sumitomo Electric Fine Polymer, Inc., Sennan-gun, Osaka 590-0458 (JP)
(72) Inventor: FUKUMOTO, Yasuhiro Sumitomo Elec. Fine PolymerInc, Sennan-gun, Osaka, 590-0458 (JP)
(74) Representative: Cross, Rupert Edward Blount
(86) International application number: PCT/JP2006/302444
(87) International publication number: WO 2006/087985

(57) **Abstract**

A polyimide-based resinous cylindrical body characterized in that 3 to 20 % by volume of fluororesin having a number average molecular weight of more than 56000 and equal to or less than 3000000 is combined in the resinous cylindrical body. In the resinous cylindrical body, preferably BN is further combined as a heat conductive element by the amount of 5 to 40 % by volume in the resinous cylindrical body. The resinous cylindrical body and a fixing belt having an inner layer made of the resinous cylindrical body exhibit excellent properties in terms of friction with a slide member, resulting superior durability and image formation.

## Description

### Technical Field

The present invention relates to a fixing belt for fixing images to a transfer paper. Particularly, the invention relates to a fixing belt which is afforded with excellent properties in terms of friction with a slide member, durability, and image formation, by controlling the molecular weight of fluororesin added to a polyimide-based resinous cylindrical body, which constitutes the inner layer of the fixing belt, and also relates to the resinous cylindrical body.

### Background Art

One of the methods for fixing images onto a transfer paper in image formation equipment such as a copier, facsimile, printer, etc. is a fixing belt method. According to this method, a transfer paper, which has a thermosensitive ink provisionally provided on the surface facing a fixing belt, is fed into between a press roller and the fixing belt, at the reverse side of which a heater is provided, so that the thermosensitive ink is fixed by fusion to the transfer paper, such fusion-fixing being firmly ensured by pressing (Patent document 1).

Such a fixing belt is made of polyimide resin or the like from the viewpoint of properties, such as elastic modulus, heat resistance, mechanical strength, particularly tensile strength, etc. (Patent document 2). And, the heater is coated with glass or the like on the part which the fixing belt touches. However, the polyimide resin cannot always be said to have a sufficient wear resistance property, suffering from wear in a relatively short time of use, and the abrasion powder due to wearing hampers heat conduction and slide. Therefore, the fixing belt or a resinous cylindrical body constituting the inner layer of the fixing belt must have superior wear resistance during slide with glass or the like. Also, it must have superior heat conductivity from the view point of ensuring good start-up response.

Next, the practical characteristics required of the fixing belt include a relationship between driving torque and slip torque. The driving torque is a torque which is necessary when the operation of the equipment is stopped and the roll for driving a belt is to be turned by hand. The slip torque is a torque which is necessary for making the roll, which is normally used for turning a belt, to turn under the conditions in which the belt is fixed so as not to turn. Thus, when the slip torque is less than twice the driving torque, a slip may occur such that an image is disordered. Therefore, it is required that the slip torque be equal to or more than twice the driving torque (Patent document 2).

In order to achieve a fixing belt that can satisfy such various kinds of requirements, various inventions have been done: for example, to increase heat conductivity by combining a thermal conductivity ingredient; to make a belt in a multilayer structure, changing the material composition by layer so as to make differences between the transfer paper side and the heater side; particularly, to combine fluororesin into a resinous cylindrical body constituting an inner layer of the fixing belt so as to decrease the frictional resistance with a heater. (Patent document 3, Patent document 4).
Patent document 1: Japanese Patent Application Publication No. H7-186162
Patent document 2: Japanese Patent No. 2516310
Patent document 3: Japanese Patent Application Publication No. H8-80580
Patent document 4: Japanese Patent Application Publication No. H5-163360

### Disclosure of Invention

### Problems to be solved

However, in terms of characteristics such as tensile strength and frictional characteristics with respect to the resinous cylindrical body constituting an inner layer of the fixing belt, and accordingly in terms of characteristics such as durability and image formation with respect to the fixing belt, the technologies disclosed in the above-mentioned documents are insufficient for satisfying the severe requirements which are demanded today.
In addition, the surface roughness, as well as the frictional characteristics, of the inner face of a polyimide-based resinous cylindrical body constituting the inner layer of the fixing belt is important in order to achieve a suitable slip torque and driving torque of the fixing belt. Therefore, in order to achieve a suitable value of surface roughness, the resin and combined substances must not be decomposed by heating during polyimide molding, and also satisfactory release from a mold must be accomplished. Accordingly, it has been desired to develop a polyimide-based resinous cylindrical body for the inner layer of a fixing belt that is superior to conventional one in terms of frictional characteristics, wear resistance, tensile strength, productivity, etc. Likewise, it has been desired to develop a fixing belt which is superior in terms of durability and image formation properties.

### Means for solving the Problems to be solved

One embodiment of the present invention, which has been made to solve the above problems, is a polyimide-based resinous cylindrical body for a fixing belt, or particularly for the inner layer of the fixing belt, the polyimide-based resin of which is made by combining a predetermined amount of fluororesin having a molecular weight exceeding 56000.
Another embodiment of the present invention is a polyimide-based resinous cylindrical body for a fixing belt or for the inner layer of the fixing belt as set forth above, in which a predetermined amount of BN (boron nitride) is further combined as a heat conductive element.
A further embodiment of the present invention is a polyimide-based resinous cylindrical body for a fixing belt or for the inner layer of the fixing belt as set forth above, in which the mixing amount of fluororesin or BN (boron nitride) is further set in a more appropriate range.
Yet another embodiment of the present invention is a polyimide-based resinous cylindrical body for a fixing belt or for the inner layer of the fixing belt as set forth above, in which the surface roughness of the inner face of the polyimide-based resinous cylindrical body is set to be a predetermined value.
Hereinafter, the present invention will be described according to the respective claims.

The invention as specified in claim 1 is a polyimide-based resinous cylindrical body which is characterized in that 3 to 20 % by volume of fluororesin having a number average molecular weight of more than 56000 and equal to or less than 3000000 is combined in the resinous cylindrical body.

The polyimide-based resinous cylindrical body according to this claim of the invention exhibits a relatively small frictional resistance with respect to the glass which covers the outer surface of the ceramic heater and a superior wear resistance, since 3 to 20 volume % of fluororesin having a number average molecular weight of more than 56000 and equal to or less than 3000000 is combined in the resinous cylindrical body. Moreover, not only the frictional coefficient thereof is low, but also the slip torque is appropriate, with less occurrence of hitching that leads to abrasion.
The term "polyimide-based" as used herein means that a polyimide resin is used as a main material for exhibiting inherent properties, or for maintaining an outer form, size, strength, etc.

The reason for limiting the number-averaged molecular weight of the fluororesin to the range exceeding 56000 is because it was found that, if it is equal to or less than 56000, the resultant polyimide-based resinous cylindrical body becomes unstable as partially decomposed by heating (melting point is equal to or more than 327°C) during polyimide molding, which tends to result in poor performance in terms of release from a mold, thereby causing the inner face roughness of the resinous cylindrical body to be degraded, although it has excellent lubrication. Likewise, the reason for limiting the number-averaged molecular weight of the fluororesin to the range equal to or less than 3000000 is because, if it exceeds 3000000, fibrosing occurs at the time of blending with polyimide and the viscosity remarkably increases, which is unsuitable for coating.

Also, it is preferable that the particle diameter of the fluororesin be equal to or less than 10 µm. The reason is because, if it exceeds 10 µm, the occupation percentage of the fluororesin in the section becomes high since the thickness of the film (layer) of a polyimide resin cylindrical body is generally 40 to 70 µm, and accordingly the tensile strength of the film decreases, and furthermore, because the dispersibility of fluororesin powder in a polyimide resin raw material solution having a varnish-like condition decreases at the time of manufacturing. As for the kind of fluororesin to be combined, a polytetrafluoroethylene powder that is available on the market at a low cost is preferable at present since the adherence to toner little occurs. However, this is not a limitation.

The invention as specified in claim 2 is the above-mentioned resinous cylindrical body, in which the fluororesin is combined by the amount of 5 to 15 % by volume in the resinous cylindrical body. According to the invention of this claim, since the mixing amount of the fluororesin is more appropriate, the resinous cylindrical body will have less friction with the glass coating of the ceramic heater surface, and will exhibit superior wear resistance and tensile strength.

The invention as specified in claim 3 is the above-mentioned resinous cylindrical body, in which the fluororesin is combined by the amount of 10 to 15 % by volume in the resinous cylindrical body. According to the invention of this claim, since the mixing amount of the fluororesin is yet more appropriate, a more excellent resinous cylindrical body can be obtained, resulting in a more superior nature of the fixing belt.

In addition, if a heat conductive element is combined, the resinous cylindrical body will make a particularly excellent inner layer of the fixing belt. That is, if a heat conductive element is combined to improve the heat conductivity of the resinous cylindrical body, a superior high-speed printing performance will be obtained.

Examples of heat conductive elements include BN, AIN, alumina, silica, silicon carbide, Si₃N₄, etc., and the heat conductivity of the resinous cylindrical body can be improved by about 1.2 times to 1.5 times by combining such a heat conductive element 5 to 40 % by volume.

Also, in the case where the heat conductive element is A1N, alumina, silica, silicon carbide, Si₃N₄, or the like, preferably the average particle diameter thereof is in a range of about 0.1 to 5 µm from the viewpoint of dispersibility and maintaining a high tensile strength of the resinous cylindrical body.
Preferably the mixing amount of the heat conductive element is in the range of 5 to 40 % by volume, and more preferably in the range of 10 to 20 % by volume. This is because, if the heat conductive element is mixed in an amount exceeding 40 % by volume, the flexibility of the resinous cylindrical body tends to decrease, occasionally resulting in causing cracks due to bending, and if the heat conductive element is mixed in an amount less than 5 % by volume, the contribution thereof to improvement in the heat conductivity will be insufficient.
As for the material of the heat conductive element, it is preferable to use a substance having an insulative property for preventing short circuit with a heater which becomes high voltage in operation.

The invention as specified in claim 4 is the above-mentioned resinous cylindrical body, in which BN is combined by the amount of 5 to 40 % by volume in the resinous cylindrical body. Of the above-mentioned examples of heat conductive elements, BN is preferable because it is most excellent in terms of moldability. Because of the above-mentioned reason, the mixing amount of BN is in the range of 5 to 40 % by volume.

By mixing BN in an amount ranging 5 to 40 % by volume, an excellent heat conductivity of the resinous cylindrical body can be obtained. Also, by combining BN as the heat conductive element, a particularly superior moldability of the resinous cylindrical body can be achieved, which is suitable for use as the inner layer of the fixing belt. Preferably the average diameter of the primary particle of BN is about 0.1 - 10 µm from the viewpoint of maintaining a high tensile strength.

The invention as specified in claim 5 is the above-mentioned resinous cylindrical body, in which the above-mentioned BN is combined by the amount of 5 to 30 % by volume in the resinous cylindrical body. It was found that a mixing amount of BN in the range of 5 to 30 % by volume is more suitable for the purpose of improving heat conductivity while maintaining high tensile strength of a polyimide-based resinous cylindrical body.

The invention as specified in claim 6 is the above-mentioned resinous cylindrical body, in which the BN is combined by the amount of 10 to 20 % by volume in the resinous cylindrical body. According to the invention of this claim, since the BN is combined by the amount of 10 to 20 % by volume, the tensile strength is sufficiently high and the frictional resistance is low. Therefore, particularly when fluororesin is combined in an amount about 10 to 15 % by volume, the resultant resinous cylindrical body is most suitable for the fixing belt.

The invention as specified in claim 7 is the above-mentioned resinous cylindrical body, in which the surface roughness of the inner face is Rz 0.5 to 4.0 µm.

If the surface roughness of the inner face of the resinous cylindrical body is less than Rz 0.5, there is a risk of causing adhesion between smooth flat surfaces because the surface of the glass coating covering a ceramic heater is a mirror-like surface. According to the invention of this claim, such adhesion will not occur because the surface roughness of the inner face is equal to or more than Rz 0.5, and the hitching with the surface of a glass coating will not be caused because Rz is 4.0 µm or less. Therefore, excellent contact performance and low frictional resistance can be maintained.
In order to maintain such surface roughness, the surface roughness of a mold for manufacturing a resinous cylindrical body is also preferably low, and moreover the structure thereof is preferably designed such that it is easy to detach the polyimide-based resinous cylindrical body in which imidization has ended.

The invention as specified in claim 8 is the above-mentioned resinous cylindrical body, in which the surface roughness of the inner face is Rz 0.5 to 3.0 µm. According to the invention of this claim, the effect of reducing the frictional resistance increases more because the surface roughness of the inner face is Rz 0.5 - 3.0 µm.

The invention as specified in claim 9 is the above-mentioned resinous cylindrical body, in which the surface roughness of the inner face is Rz 1.0 to 2.0 µm. According to the invention of this claim, the effect of reducing the frictional resistance increases yet more because the surface roughness of the inner face is Rz 1.0 - 2.0 µm.

The invention as specified in claim 10 is a fixing belt including an inner layer made of a resinous cylindrical body as specified in any of claims 1 to 9. According to the invention of this claim, since the fixing belt has the inner layer made of a resinous cylindrical body specified in any of claims 1 to 9, the fixing belt exhibits superior properties in terms of image formation as well as durability.

Examples of fixing belts include a fixing belt wholly made of a resinous cylindrical body specified in any of claims 1 to 9, a fixing belt having another fluororesin layer or the like provided on the side of transfer paper, a fixing belt having an adhesive in-between layer of 4 to 5 µm so as to have a three-layer structure, etc. In this case, the fluororesin outer layer which touches transfer paper preferably has a thickness of about 10 µm from the viewpoint of flexibility, and is made of polytetrafluoroethylene (PTFE), tetrafluoroethylene-perfluoroalkylvinylether copolymer (PFA), or a material in which PTFE and PFA are blended, so that the toner may not easily adhere to the surface. In addition, conductive carbon of 1 to 5 % by weight may be combined in the outer layer for the purpose of preventing electrification. Moreover, a heat conductive element may be combined also in the outer layer.

### Advantageous Effect of the Invention

Since a fixing belt or a resinous cylindrical body for the inner layer of the fixing belt according to the present invention is formed combining fluororesin having a number average molecular weight of more than 56000, it does not have a problem such that in the case of molding, the fluororesin combined in the polyimide becomes unstable, being partially decomposed by heating during molding, whereby the mold releasability is damaged. Therefore, the manufacture of the resinous cylindrical body is easy, and the surface roughness of the inner surface thereof also becomes appropriate. As a result, the fixing belt thus obtained has excellent properties in terms of both durability and image formation.
Also, since the number-averaged molecular weight of the fluororesin is equal to or less than 3000000, fibrosing does not easily occur and the viscosity is not so remarkably high, allowing the coating to the mold to be accomplished easily.

Moreover, by combining an appropriate amount of heat conductive element, the heat conductivity of the resinous cylindrical body can be improved, and superior high-speed printing performance can be achieved. Particularly, in the case where BN is combined as the heat conductive element, a resinous cylindrical body exhibiting excellent heat conductivity and moldability can be obtained.

Also, since the mixing amount of the fluororesin is appropriate, it is possible to provide a resinous cylindrical body as an inner layer of a fixing belt which is excellent in both tensile strength and frictional resistance, and accordingly to provide a fixing belt which is superior in terms of durability and image formation.

### Best Mode for Carrying out the Invention

Hereinafter, an explanation of the present invention will be given based on the best mode of embodiments. However, the present invention should not be regarded as being limited to the following embodiments. It will be possible to modify the following embodiments in various manners within the scope or equivalence of the present invention.

The manufacturing method and materials used in the examples of the present invention and the comparative examples are both basically the same. Therefore, their manufacturing methods and test results will be described without making distinction between the examples of the present invention and the comparative examples, and also the features of examples of the present invention will be described.

### (Manufacture of polyimide-based resinous cylindrical body)

A fluororesin powder having a primary particle diameter of 0.3 µm and a particle diameter of 10 µm (Lubron L-2 made by Daikin Industries, Ltd., Average molecular weight: 500000, Melting point: 330°C) and a heat conductive element consisting of silica having a particle diameter of 10 µm or BN having a particle diameter of 10 µm or less were mixed into a polyimide varnish (U-varnish S made by Ube Industries, Ltd., for forming synthetic polyimide) in an amount of volume % relative to polyimide solid, respectively as shown in the following tables, and sufficiently dispersed by a three-roll mill, so that a polyimide varnish in which fluororesin and heat conductive elements were combined was prepared.

The reason for using the three-roll mill for such dispersion is that it will not have adverse influences such as causing particles to cohere into a large ball or causing a heat conductive element to break, or the like.

The mixing amounts of the fluororesin and the heat conductive elements are as shown in Tables I and II. The BN used has a scaly shape of graphite structure of 10 µm or less in particle diameter (UHP-10 made by Showa Denko K.K.).

The polyimide varnish thus prepared was painted onto the surface of an aluminum cylindrical mold having an outer diameter of 24 mm and a length of 500 mm so as to have a smooth flat surface of 60 µm in thickness after curing. Thereafter, the mold was heated at 120 °C for 40 minutes, and further at 200 °C for 30 minutes, and thereby the solvent NMP (N-methyl-2-pyrrolidone) was removed and the imide reaction of the first step was caused to progress to make a polyimide intermediate.

Subsequently, the imide shift of the polyimide was done by heating at 250°C for 1 hour and at 400°C for 30 minutes, and thus a polyimide-based resinous cylindrical body (an inner layer of a fixing belt) was obtained by removing from the mold.

Furthermore, the resinous cylindrical bodies thus produced were cut longitudinally and punched in a circumferential (traverse) direction with a dumbbell mold according to JIS standard, so that samples of polyimide-based resinous cylindrical bodies for evaluation tests were prepared.

### (Evaluation Tests)

Evaluation tests were conducted in order to examine the tensile strength and frictional resistance of the resinous cylindrical bodies thus prepared. The test results are shown in Tables I and II, respectively.

**Table I**

| Tensile strength (Unit:N/mm²) | | | | | | |
|---|---|---|---|---|---|---|
| Heat conductive element | | Combination ratio of Fluororesin ( Volume % ) | | | | |
| Type | Combination ratio( Volume % ) | 0 | 5 | 10 | 15 | 20 |
| - | 0 | 290 | 290 | 260 | 250 | 220 |
| Silica | 10 | | 220 | 200 | 190 | |
| | 20 | 210 | | 140 | | |
| | 30 | 190 | 120 | 80 | | |
| | 5 | | | | | |
| | 10 | | 230 | 210 | 200 | |
| | 15 | | | | | |
| BN | 20 | 220 | | 150 | | |
| | 25 | 210 | 150 | 140 | | |
| | 30 | 200 | 130 | 90 | | |
| | 35 | 140 | | | | |
| | 40 | 90 | | | | |

**Table II**

| Frictional resistance ( Unit : N ) | | | | | | |
|---|---|---|---|---|---|---|
| Heat conductive element | | Combination ratio of Fluororesin ( Volume % ) | | | | |
| Type | Combination ratio( Volume % ) | 0 | 5 | 10 | 15 | 20 |
| - | 0 | 2.1 | 1.3 | 1.2 | 0.9 | |
| Silica | 10 | | 1.3 | 1.0 | 0.9 | |
| | 20 | 2.2 | | 1.1 | | |
| | 30 | 2.4 | 1.4 | 1.3 | | |
| | 5 | | | | | |
| | 10 | | 1.2 | 0.9 | 0.8 | |
| | 15 | | | | | |
| BN | 20 | 2.1 | | 1.0 | | |
| | 25 | 2.0 | 1.1 | 1.2 | | |
| | 30 | 2.3 | 1.3 | 1.2 | | |
| | 35 | 2.5 | | | | |
| | 40 | | | | | |

Table 1 shows the results of measurement of the tensile strength. The unit of the values is N/mm².
Table II shows the results of friction tests, which were conducted basically according to JIS K7125. A jig for measuring friction was made by the patent applicant of the present invention. The jig has a structure in which steel balls having a diameter of 5 mm were embedded at three points with equal intervals in a circumference of 20 mm in diameter on the underside of a base, thus having a total weight of 1.5kg, that is, 500g per steel ball. The friction test was conducted by measuring the load at which the jig moved when it was pulled at 200 mm/min under the conditions in which the jig was put on a sample piece which was attached, with its evaluation surface facing up, on a flat glass. The measured values of such load are shown in Table II.

As can be seen from Table I, with respect to fluororesin, at least to the extent of 20 % by volume of its mixing amount, the tensile strength is maintained at a certain level, although the tensile strength deteriorates a little as the mixing amount increases in either of the fluororesin and the heat conductive elements. Particularly, the mixing amount of the fluororesin is preferably 15 % by volume or less from the viewpoint of the tensile strength. In this case, when BN is used as the heat conductive element, the mixing amount of BN is preferably 20 % by volume or less.

As can be seen from Table II, if the combination amount of the fluororesin is 5 % by volume or more, the frictional resistance is equal to or less than 1.3 N, regardless of the combination ratio of the heat conductive element. Judging from the condition where there is saturation in the deterioration of the frictional resistance at the mixing amount of 5 % by volume, it may be said that the frictional resistance can be maintained at a sufficiently low level even if the mixing amount is about 3 % by volume.

### (Manufacture of fixing belt)

A heat conductive element and a fluororesin powder having a primary particle diameter of 0.3 µm and a particle diameter of 10 µm (Lubron L-2 made by Daikin Industries, Ltd., Average molecular weight: 500000, Melting point: 330°C) were mixed into a polyimide varnish (U-varnish S made by Ube Industries, Ltd.), and sufficiently dispersed by a three-roll mill, so that a polyimide varnish thus combined were prepared. The mixing amounts are as shown in Table III and Table IV Also, silica or BN was used as the heat conductive elements.

The combined polyimide varnish thus prepared was painted onto the surface of an aluminum cylindrical mold having an outer diameter of 24 mm and a length of 500 mm so as to have a smooth flat surface of 60 µm in thickness after curing. Thereafter, the mold was heated at 120 °C for 40 minutes, and further at 200 °C for 30 minutes, and thereby the solvent NMP was removed and the imide reaction of the first step was progressed to make a polyimide intermediate.

Subsequently, a primer (Du Pont 855-003) for fluororesin was coated by a dipping method on the above-mentioned polyimide intermediate so as to have a thickness of 5 µm after baking, and dried for 30 minutes in an atmosphere of 200 °C.

Moreover, a fluororesin dispersion (Du Pont 855-510) in which conductive carbon is combined was coated by dipping method so as to have a thickness of 10 µm after baking, and heated for 1 hour at 250 °C and for 30 minutes at 400 °C, so that the imide shift of the polyimide was completed and the fluororesin was baked. Then, the resultant product was pulled out from the mold, and cut into a predetermined shape to obtain a fixing belt.

### (Evaluation test)

The evaluation tests of durable ability and image formation were performed with respect to the fixing belts produced by the above method. The results of the tests are shown in Table III and Table IV, respectively.

**Table III**

| Durable ability | | | | | | |
|---|---|---|---|---|---|---|
| Heat conductive element | | Combination ratio of Fluororesin ( Volume % ) | | | | |
| Type | Combination ratio( Volume %) | 0 | 5 | 10 | 15 | 20 |
| - | 0 | ○ | ○ | ○ | ○ | ○ |
| Silica | 10 | ○ | ○ | ○ | ○ | ○ |
| | 20 | ○ | ○ | ○ | Δ | Δ |
| | 30 | ○ | ○ | Δ | × | × |
| | 5 | ○ | ○ | ○ | ○ | ○ |
| | 10 | ○ | ○ | ○ | ○ | ○ |
| | 15 | ○ | ○ | ○ | ○ | Δ |
| BN | 20 | ○ | ○ | ○ | Δ | Δ |
| | 25 | ○ | ○ | Δ | Δ | × |
| | 30 | ○ | ○ | Δ | × | × |
| | 35 | Δ | Δ | × | × | × |
| | 40 | Δ | × | × | × | × |

**Table IV**

| Image formation | | | | | | |
|---|---|---|---|---|---|---|
| Heat conductive element | | Combination ratio of Fluororesin ( Volume % ) | | | | |
| Type | Combination ratio( Volume %) | 0 | 5 | 10 | 15 | 20 |
| - | 0 | × | Δ | ○ | ○ | ○ |
| Silica | 10 | × | Δ | ○ | ○ | ○ |
| | 20 | × | Δ | ○ | ○ | ○ |
| | 30 | × | Δ | ○ | ○ | ○ |
| | 5 | × | Δ | ○ | ○ | ○ |
| | 10 | × | Δ | ○ | ○ | ○ |
| | 15 | × | Δ | ○ | ○ | ○ |
| BN | 20 | × | Δ | ○ | ○ | ○ |
| | 25 | × | Δ | ○ | ○ | ○ |
| | 30 | × | Δ | ○ | ○ | ○ |
| | 35 | × | Δ | Δ | Δ | ○ |
| | 40 | × | Δ | Δ | Δ | ○ |

Table III shows the results of the durability tests. In Table III, the mark ○ indicates that the number of accomplished passage of paper was 100000 sheets or more, the mark Δ indicates that a belt end was damaged by the passage of 50000 to 100000 sheets of paper, and the mark × indicates that a belt end was damaged by the passage of less than 50000 sheets of paper. As can be seen from Table III, even in the cases where the mixing amount of the fluororesin is 20% by volume, the durability is sufficient if the combination ratio of the heat conductive element is 20% by volume or less. Also, it is understood that even in the cases where the combination ratio of the heat conductive element exceeds 20% by volume, the durability is sufficiently achieved if the total mixing amount of the heat conductive element and the fluororesin is about 35% by volume or less.

Table IV shows the evaluation test results of image formation. In Table IV, the mark ○ indicates that images were not disordered, the mark Δ indicates that a partial disorder in the images occurred, and the mark × indicates that the images were disordered wholly.

It is considered that in the cases where the mixing amount of the heat conductive element is 30 % by volume or less, a sufficient image formation property will be obtained if the mixing amount of the fluororesin is at least 3% or more by volume, since a certain level of image formation property is obtained even if the mixing amount of the fluororesin is 5 % by volume, as the results of Table IV show. Also, from the results of Table IV, it is understood that a sufficient image formation property can be obtained in the cases where the mixing amount of the fluororesin is equal to or less than 20 % by volume, and that the image formation property is particularly excellent if the mixing amount is 10 to 20 % by volume. That is, if the mixing amount of the fluororesin is equal to or more than 10 % by volume, excellent image formation property can be achieved until the mixing amount of the heat conductive element reach 30 % by volume, and when the heat conductive element is BN, the image formation property is excellent even if BN of 40 % by volume is combined, provided that the fluororesin of 20 % by volume is combined. Also, it is understood that if fluororesin is appropriately combined, the heat conductive element has low relationship with the image formation property until the combination ratio is 30 % by volume.

### (Overall evaluation)

From the above results, the minimum amount of the fluororesin to be mixed into a polyimide-based resinous cylindrical body, that is the inner layer of a fixing belt, is 3 % by volume from the viewpoint of reducing the abrasion resistance, preferably 5 % by volume, and more preferably 10 % by volume from the viewpoint of obtaining a more excellent image formation property. Likewise, it is understood that the maximum mixing amount of the fluororesin is 20 % by volume, and preferably 15 % by volume in consideration of the upper limit of mixing amount in total with the heat conductive element to be combined together.

Furthermore, the maximum mixing amount of BN is 40% by volume, preferably 30% by volume, and more preferably 20% by volume, depending on the upper limit of the mixing amount in total with the fluororesin. Also, if the mixing amount of BN exceeds 40 % by volume, the flexibility tends to decrease, and in order to achieve sufficient decrease of heat conductivity, the minimum mixing amount of BN is preferably 5 % by volume, and more preferably 10 % by volume.

## Claims

1. A polyimide-based resinous cylindrical body **characterized in that** 3 to 20 % by volume of fluororesin having a number average molecular weight of more than 56000 and equal to or less than 3000000 is combined in the resinous cylindrical body.

2. A resinous cylindrical body according to claim 2 , wherein the fluororesin is combined by the amount of 5 to 15 % by volume in the resinous cylindrical body.

3. A resinous cylindrical body according to claim 2 , wherein the fluororesin is combined by the amount of 10 to 15 % by volume in the resinous cylindrical body.

4. A resinous cylindrical body according to any of claims 1 to 3, wherein BN is further combined by the amount of 5 to 40 % by volume in the resinous cylindrical body.

5. A resinous cylindrical body according to claim 4, wherein the BN is combined by the amount of 5 to 30 % by volume in the resinous cylindrical body.

6. A resinous cylindrical body according to claim 5, wherein the BN is combined by the amount of 10 to 20 % by volume in the resinous cylindrical body.

7. A resinous cylindrical body according to any of claims 1 to 6, wherein the surface roughness of the inner face of the resinous cylindrical body is Rz 0.5 to 4.0 µm.

8. A resinous cylindrical body according to claim 7, wherein the surface roughness of the inner face of the resinous cylindrical body is Rz 0.5 to 3.0 µm.

9. A resinous cylindrical body according to claim 8, wherein the surface roughness of the inner face of the resinous cylindrical body is Rz 1.0 to 2.0 µm.

10. A fixing belt including an inner layer made of a resinous cylindrical body as specified in any of claims 1 to 9.
